# EUROPEAN PATENT SPECIFICATION

(11) **EP 1 788 297 B1**
(45) Date of publication and mention of the grant of the patent: **11.04.2012**
(21) Application number: 06291659.8
(22) Date of filing: 25.10.2006
(51) Int. Cl.: F16L 47/16

(54) **Reinforcing ring for a plastic fitting and plastic fitting incorporating a reinforcing ring**
Verstärkungsring für ein Kunststofffitting und Kunststofffitting mit einem Verstärkungsring
Anneau de renforcement pour un raccord en plastique et raccord avec un anneau de renforcement

(30) Priority: 27.10.2005 CA 2524768
(43) Date of publication of application: 23.05.2007
(73) Proprietor: Aliaxis R & D, 78540 Vernouillet (FR)
(72) Inventor: Laflamme, Robert, Verdun-Quebec (CA); Hikmat, Rabih, Laval - Quebec (CA)
(74) Representative: Sonnenberg, Fred

(56) References cited:
- JP-A- 2 299 929
- US-A- 4 335 753
- US-A- 5 582 435
- US-A1- 2003 184 085
- US-B1- 6 186 558

## Description

This invention relates to a reinforcing ring for a plastic fitting and a plastic fitting incorporating such a reinforcing ring. The invention has particular utility with respect to fire sprinkler heads in buildings,.

In the past, plastic fittings have been used for receiving a threaded male part, typically a threaded pipe. Also, in the past, reinforcing rings have been used to reinforce plastic fittings, such as described in U.S. Patents 5,582,439 and 6,866,305 to Spears and U.S. Patent Application 2004/0051316 to Spears. Also, U.S. Patents 4,682,797 to Hildner and 6,186,558 to Komolrochanaporn, as well as U.S. patent Application 2003/0184085 to Thompson, disclose a reinforcing ring used with plastic fittings.

Further, US 5, 582, 435 discloses a pipe having a threaded fitting.

Although reinforcing rings that have been made in the past, and used with plastic fittings, there have been problems with such rings and fittings, particularly relating to cross-threading and shearing. Therefore, the present invention provides an improved reinforcing ring and an improved fitting incorporating the reinforcing ring.

One problem is that when the male part which is being inserted into the plastic fitting is over-tightened, there is a tendency for the plastic fitting to shear.

Also, cross-threading occurs when the thread axis of the male part is not properly aligned relative to the female fitting's thread axis. All plastic thread design is susceptible to cross-threading. One way of at least reducing the risk of cross-threading is to guide the male part to be axially in line with the female fitting. Another way to lessen the likelihood of cross-threading is to reinforce the first few plastic threads of the fitting with a harder material. The present invention has been able to successfully combine both of these approaches to provide an improved method of reducing the likelihood of cross-threading using only a single starter thread. None of the prior art reinforcing rings use only a single starter thread.

Accordingly, it is an object of this invention to at least partially overcome the disadvantages of the prior art. Also, it is an object of this invention to provide an improved reinforcing ring for plastic fittings and an improved plastic fitting incorporating the reinforcing ring.
Accordingly, in one of its aspects, this invention resides in providing a reinforcing ring for a plastic fitting, comprising: a first tubular portion; a radial portion extending radially inwardly from a forward end of the tubular portion; a guide portion extending rearwardly from a radially-inner region of the radial portion; and a starter thread extending radially from a rearward end of the guide portion.

In a further aspect, the present invention resides in providing a plastic fitting comprising: a plastic body having plastic threads and a reinforcing ring as described above wherein the first tubular portion of the reinforcing ring surrounds at least a portion of the plastic body.

Advantageously in the plastic fitting the starter thread of the reinforcing ring is aligned concentrically and axially with the threads of the plastic body.

Preferably the plastic fitting is aimed at receiving a threaded male part and the guide portion of the reinforcing ring forms a guide portion of the fitting for guiding the male part to the starter thread.

Preferably the plastic fitting is aimed at entering a threaded female part and the guide portion of the reinforcing ring forms a guide portion of the fitting for guiding the starter thread of the fitting to the female part.

Advantageously in the plastic fitting the radial portion of the reinforcing ring forms a forward protective portion protecting the plastic body from contact with the part engaging the fitting as said part initially engages the fitting.

Preferably the plastic fitting is molded with the first tubular portion of the reinforcing ring positioned within and surrounded by the plastic body.

Advantageously in the plastic fitting there is a first thread and a last thread of the plastic body and the tubular portion of the reinforcing ring extends rearwardly to at least the last thread of the plastic body.

Preferably in the plastic fitting the first tubular portion extends rearwardly beyond the last thread of the plastic body.

Advantageously in the plastic fitting the starter thread of the reinforcing ring forms a lead face of a first thread of the threads of the plastic body.

Further aspects of the invention will become apparent upon reading the following detailed description and drawings which illustrate the invention and preferred embodiments of the invention.

In the drawings, which illustrate embodiments of the invention:
Figure 1 is a perspective view of a preferred embodiment of the reinforcing ring of the invention;
Figure 2 is a top view of a preferred embodiment of the reinforcing ring of the invention;
Figure 3 is a cross-sectional view through line A-A in Figure 2 of a preferred embodiment of the reinforcing of the invention;
Figure 4 is another cross-sectional view through line B-B in Figure 2 of a preferred embodiment of the reinforcing ring of the invention;
Figure 5 is a detail of a portion "C" from Figure 4 of one embodiment of the reinforcing ring of the invention;
Figure 6 is a side view of a preferred plastic fitting of the invention;
Figure 7 is a cross-sectional view through line D -D in Figure 6 of a preferred embodiment of a fitting of the invention;
Figure 8 is a detail of a portion "E" from Figure 7 of a preferred embodiment of the fitting of the invention;
Figure 9 shows a metal sheet from which a preferred embodiment of the reinforcing ring of the invention may be stamped;
Figure 10 is a cross-sectional view of another embodiment of the invention showing the reinforcing ring applied on the threaded male part of the fitting ready to receive a female part of a second tubular portion in a threaded engagement; and
Figure 11 is a detail of a portion "F" from Figure 10.

The invention will be better understood, and other aims, details, characteristics and advantages will appear more clearly along the following description of several embodiments of the invention, given as purely illustrative and non limitative examples, with a reference to the schematic attached drawings.

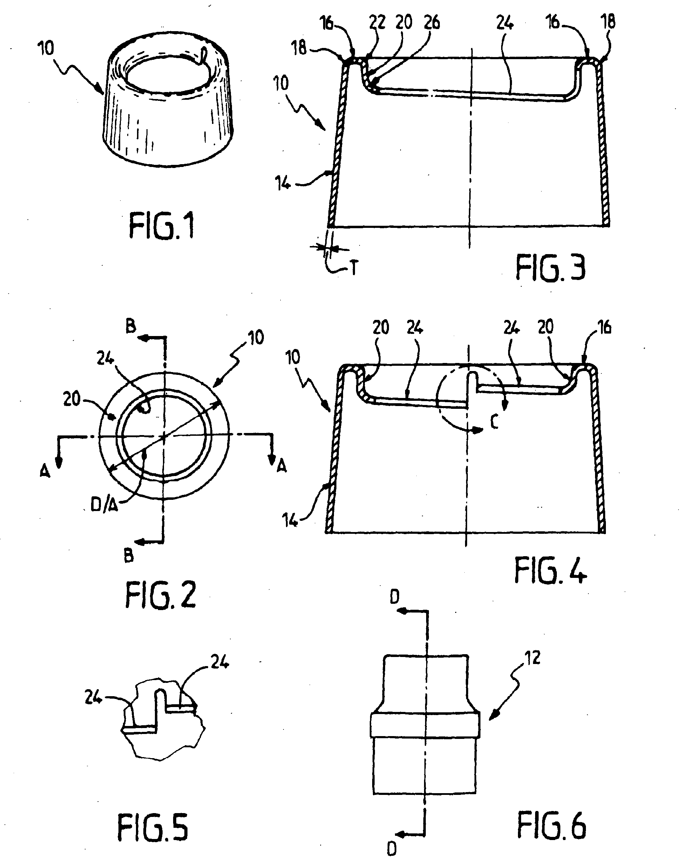

As shown in Figure 1, one embodiment of the present invention relates to a reinforcing ring 10 for a plastic fitting 12. As best seen in Figure 3, the reinforcing ring 10 comprises a first tubular portion 14 and a radial portion 16 which extends radially inwardly from a forward end 18 of the tubular portion 14. There is also a guide portion 20 extending rearwardly from a radially-inner region 22 of the radial portion 16. Also, there is a starter thread 24 extending radially inwardly from a rearward end 26 of the guide portion 20.

In one preferred embodiment, the guide portion 20 is tubular. In another preferred embodiment, the guide portion 20 is conical and extends rearwardly and inwardly as seen in Figure 3.

Preferably, the tubular portion 14 is conical, preferably at about 86° from horizontal, but the tubular portion 14 may be cylindrical (90° from horizontal).

The reinforcing ring 10 is stamped from a metal sheet 42 and in a more preferred embodiment the ring is made of stainless steel.

Preferably, the reinforcing ring 10 is stamped from the steel sheet 42, preferably a stainless steel sheet.

When the reinforcing ring 10 is stamped in this manner, the starter thread 24 is no more than 360° around the guide portion 20. In a preferred embodiment, the starter thread 24 is 360° around the guide portion 20. In another preferred embodiment, the starter thread is less than 360° around the guide portion as seen in Figure 2.

As will be seen from the Figures, the reinforcing ring 10, particularly when stamped from a metal sheet 42, is dimensioned such that the thickness T of each of the first tubular portion 14, the radial portion 16 and the guide portion 20 (as best seen in Figure 3) is relatively small or thin compared to the diameter DIA of the first tubular portion 14 as best seen in Figure 2. Thus, an appropriate thickness T of metal sheet 42 is selected in order to make the reinforcing ring 10 appropriately dimensioned.

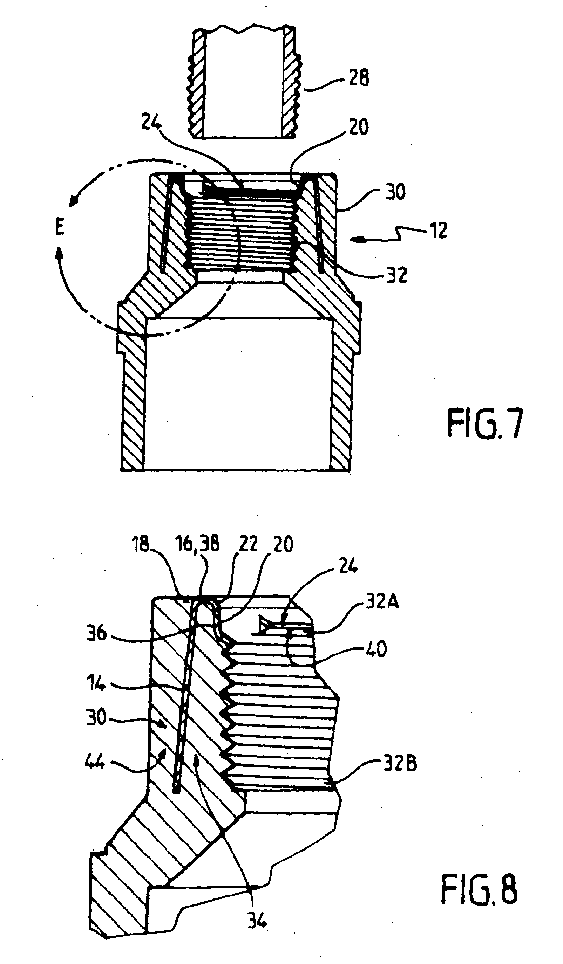

The plastic fitting 12 is intended to and does receive a threaded male part 28 as seen in Figure 7. Often the male part 28 is made of metal. The plastic fitting has a plastic body 30 which has inner plastic threads 32 for receiving the male part 28 in threaded engagement.

The guide portion 20 of the reinforcing ring 10 forms a guide portion 36 of the fitting 12 for guiding the male part 28 to the starter thread 24. This reduces the likelihood of cross-threading.

The starter thread 24 of the reinforcing ring forms a lead face 40 of the first thread 32A of the threads 32 of the plastic body 30.

Preferably, when the reinforcing ring 10 is properly installed as part of plastic fitting 12, the radial portion 16 of the reinforcing ring 10 forms a forward protective portion 38 protecting the plastic body 30 from contact with the male part 28 as the male part 28 initially engages the fitting 12.

The first tubular portion 14 of the reinforcing ring 10 surrounds at least a portion 34 of the plastic body 30.

Preferably, the plastic fitting 12 is molded with the first tubular portion 14 of the reinforcing ring 10 within and surrounded by a portion 44 of the plastic body 30.

Typically there are several inner threads 32 of the plastic body 30. There will be at least a first inner thread 32A (as best seen in Figure 7) closer to the starter thread 24 and a last inner thread 32B further away from the starter thread 24. Preferably the tubular portion 14 of the reinforcing ring 10 extends rearwardly to at least the last inner thread 32B of the plastic body 30. This will reduce the tendency for shearing the plastic fitting 2 upon over-tightening.

More preferably, the first tubular portion 14 extends rearwardly beyond the last thread 32B of the plastic body 30.

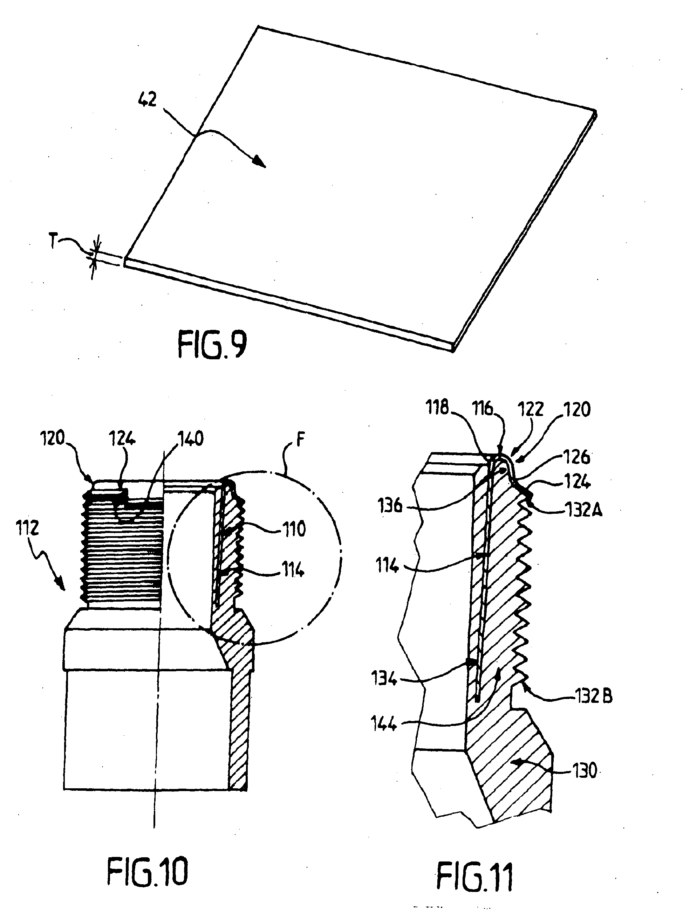

Another preferred embodiment of the present invention is relating to a reinforcing ring applied on the threaded male part of the fitting ready to enter the threaded female part of a second tubular portion in threaded engagement. The elements of this embodiment, as referred to in Fig 10 and 11, are labeled with the same number as the corresponding elements for the previous embodiment, increased by 100.

As seen in Fig. 10 and 11 this embodiment relates to a reinforcing ring 110 for a plastic fitting 112. The reinforcing ring comprises a first tubular portion 114 and a radial portion 116 which extends radially outwardly from a forward end 118 of the tubular portion 114. There is also a guide portion 120 extending rearwardly from a radially-outer region 122 of the radial portion 116. Also, there is a starter thread 124 extending radially outwardly from a rearward end 126 of the guide portion 120.

The plastic fitting 112 is intended to cooperate with a threaded female part such as one seen in Figure 7. The plastic fitting has a plastic body 130 which has outer plastic threads 132 for entering the female part in threaded engagement.

The guide portion 120 of the reinforcing ring forms a guide portion 136 of the fitting 112 for guiding the starter thread 124 towards the female part. This reduces the likelihood of cross-threading.

The starter thread 124 of the reinforcing ring forms a lead face 140 of the first thread 132A of the threads 132 of the plastic body 130.

Preferably when the reinforcing ring 110 is properly installed as part of the male plastic fitting 112, the radial portion 116 of the reinforcing ring forms a forward protective portion protecting the male plastic body 130 from contact with a female part as the threaded male portion of the fitting initially engages the female part.

All specific improvements described here above for the previous embodiments apply also to this last mentioned embodiment.

It will be understood that, although various features of the invention have been described with respect to one or another of the embodiments of the invention, the various features and embodiments of the invention may be combined or used in conjunction with other features and embodiments of the invention as described and illustrated herein. Thus for example, the reinforcing ring has been described as made of metal and preferably of stainless steel, but other technical plastic materials or ceramics could also be used to provide similar or improved reinforcement and other additional benefits such as no electro-corrosion of the joint.

Although this disclosure has described and illustrated certain preferred embodiments of the invention, it is to be understood that the invention is not restricted to these particular embodiments. Rather, the invention includes all embodiments which are functional or mechanical equivalents of the specific embodiments and features that have been described and illustrated herein.

## Claims

1. A plastic fitting (12, 112) intended to cooperate with a threaded part engaging the plastic fitting from a forward direction, said plastic fitting comprising a plastic body (30, 130) having plastic threads (32, 132) and a reinforcing ring (10, 110), wherein said reinforcing ring comprises a first tubular portion (14, 114) and a starter thread (24, 124), wherein the first tubular portion (14) of the reinforcing ring surrounds at least a portion of the plastic body, wherein the starter thread (24, 124) of the reinforcing ring is aligned concentrically and axially with the threads (32, 132) of the plastic body (30, 130),
**characterised in that** said reinforcing ring is stamped from a metal sheet (42) and comprised radial portion (16, 116) extending radially from a forward end (18,118) of the tubular portion, a guide portion (20, 120) extending rearwardly from the radial portion (16, 116), said starter thread extending radially from a rearward end (26, 126) of the guide portion, and forms a lead face of a first thread of the threads (32, 132) of the plastic body (30, 130).

2. A plastic fitting (12) as in claim 1, wherein said radial portion (16) extends radially inwardly from said forward end (18) of the tubular portion (14), said guide portion (20) extending rearwardly from a radially-inner region of said radial portion (16) and said starter thread (24) extending radially inwardly from a rearward end (26) of said guide portion.

3. A plastic fitting (112) as in claim 1, wherein said radial portion (116) extends radially outwardly from said forward end (118) of the tubular portion (114), said guide portion (120) extending rearwardly from a radially-outer region of said radial portion (116) and said starter thread (124) extending radially outwardly from a rearward end (126) of said guide portion.

4. A plastic fitting as defined in claim 1 wherein the guide portion (20, 120) is tubular.

5. A plastic fitting (10) as defined in claim 2 wherein the guide portion (20) is conical and extends rearwardly and inwardly.

6. A plastic fitting (110) as defined in claim 3 wherein the guide portion (120) is conical and extends rearwardly and outwardly.

7. A plastic fitting (10, 110) as defined in any one of claims 1 to 6 wherein the first tubular portion (14) is cylindrical.

8. A plastic fitting (10, 110) as defined in any one of claims 1 to 6 wherein the first tubular portion (14) is conical.

9. A plastic fitting (10, 110) as defined in any one of claims 1 to 8 wherein the reinforcing ring is made of metal, preferably of stainless steel, or of technical plastic materials or of ceramics.

10. A plastic fitting (10, 110) as defined in any one of claims 1-9, wherein said starter thread (24, 124) is no more than 360° around the guide portion.

11. A plastic fitting (10, 110) as defined in any one of claims 1 to 9 wherein the starter thread (24, 124) is 360° around the guide portion.

12. A plastic fitting (10, 110) as defined in any one of claims 1 to 10 wherein the reinforcing ring is stamped from a stainless steel sheet.

13. A plastic fitting (10, 110) as defined in any one of claims 1 to 12 wherein each of the first tubular portion (14, 114), radial portion (16, 116) and guide portion (20, 120) has a thickness and the thickness of each of the first tubular portion, radial portion and guide portion is relatively small compared to the diameter of the first tubular portion (14, 114).

14. A plastic fitting (12) for receiving a threaded male part (28, 112), as defined in claim 2, wherein the guide portion (20) of the reinforcing ring (10) forms a guide portion of the fitting for guiding the male part to the starter thread (24).

15. A plastic fitting (112) for entering a threaded female part, as defined in claim 3, wherein the guide portion (120) of the reinforcing ring (110) forms a guide portion of the fitting for guiding the starter thread (124) of the fitting to the female part.

16. A plastic fitting (12, 112) as defined in any one of claims 1 to 15 wherein the radial portion (16, 116) of the reinforcing ring (10, 110) forms a forward protective portion protecting the plastic body (30, 130) from contact with the part engaging the fitting as said part initially engages the fitting.

17. A plastic fitting (12, 112) as defined in any one of claims 1 to 16 wherein the plastic fitting is molded with the first tubular portion (14, 114) of the reinforcing ring (10, 110) positioned within and surrounded by the plastic body (30, 130).

18. A plastic fitting (12, 112) as defined in any one of claims 1 to 17 wherein there is a first thread (32A, 132A) and a last thread (32B, 132B) of the plastic body (30, 130) and the tubular portion (14, 114) of the reinforcing ring (10, 110) extends rearwardly to at least the last thread of the plastic body.

19. A plastic fitting (12, 112) as defined in claim 18 wherein the first tubular portion (14, 114) extends rearwardly beyond the last thread (32B, 132B) of the plastic body (30, 130).

## Patentansprüche

1. Kunststoff-Fitting (12, 112), vorgesehen um mit einem Gewindepart zusammenwirken, von vorne mit dem Kunststoff-Fitting eingreifend, wobei das Kunststoff-Fitting einen Kunststoffkörper (30, 130) umfasst, der ein Kunststoffgewinde (32, 132) und einen Verstärkungsring (10, 110) aufweist, wobei der Verstärkungsring einen ersten rohrförmigen Abschnitt (14, 114) und einen Gewindeansatz (24, 124) umfasst, wobei der erste rohrförmige Abschnitt (14) des Verstärkungsringes wenigstens einen Abschnitt des Kunststoffkörpers umgibt, wobei der Gewindeansatz (24, 124) des Verstärkungsrings konzentrisch und axial mit dem Gewinde (32, 132) des Kunststoffkörpers (30, 130) ausgerichtet ist,
**dadurch gekennzeichnet, dass** der Verstärkungsring aus einem Blech (42) ausgestanzt ist und einen radialen Abschnitt (16, 116) umfasst, der sich von einem vorderen Ende (18, 118) des rohrförmigen Abschnitts aus radial erstreckt, sowie einen Führungsabschnitt (20, 120), der sich vom radialen Abschnitt (16, 116) nach hinten erstreckt, wobei der Gewindeansatz sich von einem hinteren Ende (26, 126) des Führungsabschnittes aus radial erstreckt und eine Stirnfläche eines ersten Gewindes der Gewinde (32, 132) des Kunststoffkörpers (30, 130) bildet.

2. Kunststoff-Fitting (12) nach Anspruch 1, bei welchem sich der radiale Abschnitt (16) von dem vorderen Ende (18) des rohrförmigen Abschnittes (14) aus radial nach innen erstreckt, wobei sich der Führungsabschnitt (20) von einem radial inneren Bereich des radialen Abschnittes (16) aus nach hinten erstreckt und sich der Gewindeansatz (24) von einem hinteren Ende (26) des Führungsabschnittes aus radial nach innen erstreckt.

3. Kunststoff-Fitting (112) nach Anspruch 1, bei welchem sich der radiale Abschnitt (116) von einem vorderen Ende (118) des rohrförmigen Abschnitts (114) aus radial nach außen erstreckt, wobei sich der Führungsabschnitt (120) von einem radial äußeren Bereich des radialen Abschnittes (116) aus nach hinten erstreckt und sich der Gewindeansatz (124) von einem hinteren Ende (126) des Führungsabschnittes aus radial nach außen erstreckt.

4. Kunststoff-Fitting nach Anspruch 1, bei welchem der Führungsabschnitt (20, 120) rohrförmig ist.

5. Kunststoff-Fitting (10) nach Anspruch 2, bei welchem der Führungsabschnitt (20) kegelförmig ausgebildet ist und sich nach hinten und nach innen erstreckt.

6. Kunststoff-Fitting (110) nach Anspruch 3, bei welchem der Führungsabschnitt (120) kegelförmig ausgebildet ist und sich nach hinten und nach außen erstreckt.

7. Kunststoff-Fitting (10, 110) nach einem der Ansprüche 1 bis 6, bei welchem der erste rohrförmige Abschnitt (14) zylindrisch ist.

8. Kunststoff-Fitting (10, 110) nach einem der Ansprüche 1 bis 6, bei welchem der erste rohrförmige Abschnitt (14) kegelförmig ist.

9. Kunststoff-Fitting (10, 110) nach einem der Ansprüche 1 bis 8, bei welchem der Verstärkungsring aus Metall, vorzugsweise aus Edelstahl oder aus einem technischen Kunststoff oder aus Keramik hergestellt ist.

10. Kunststoff-Fitting (10, 110) nach einem der Ansprüche 1 bis 9, bei welchem der Gewindeansatz (24, 124) nicht mehr als 360° um den Führungsabschnitt verläuft.

11. Kunststoff-Fitting (10, 110) nach einem der Ansprüche 1 bis 9, bei welchem der Gewindeansatz (24, 124) 360° um den Führungsabschnitt verläuft.

12. Kunststoff-Fitting (10, 110) nach einem der Ansprüche 1 bis 10, bei welchem der Verstärkungsring aus einem Edelstahlblech ausgestanzt ist.

13. Kunststoff-Fitting (10, 110) nach einem der Ansprüche 1 bis 12, bei welchem der erste rohrförmige Abschnitt (14, 114), der radiale Abschnitt (16, 116) und der Führungsabschnitt (20, 120) jeweils eine Stärke aufweisen und die jeweilige Stärke des ersten rohrförmigen Abschnittes, des radialen Abschnittes und des Führungsabschnittes relativ klein im Vergleich zum Durchmesser des ersten rohrförmigen Abschnittes (14, 114) ist.

14. Kunststoff-Fitting (12) zur Aufnahme eines männlichen Parts mit Außengewinde (28, 112) nach Anspruch 2, bei welchem der Führungsabschnitt (20) des Verstärkungsrings (10) einen Führungsabschnitt des Fittings zur Führung des männlichen Parts an den Gewindeansatz (24) bildet.

15. Kunststoff-Fitting (112) zum Einführen eines weiblichen Parts mit Innengewinde nach Anspruch 3, bei welchem der Führungsabschnitt (120) des Verstärkungsrings (110) einen Führungsabschnitt des Fittings zur Führung des Gewindeansatzes (124) des Fittings zu dem weiblichen Part bildet.

16. Kunststoff-Fitting (12, 112) nach einem der Ansprüche 1 bis 15, bei welchem der radiale Abschnitt (16, 116) des Verstärkungsrings (10, 110) einen nach vorne schützenden Abschnitt bildet, der den Kunststoffkörper (30, 130) beim Einführen des in das Fitting eingeführten Parts vor einer Berührung mit diesem schützt.

17. Kunststoff-Fitting (12, 112) nach einem der Ansprüche 1 bis 16, bei welchem das Kunststoff-Fitting zusammen mit dem ersten rohrförmigen Abschnitt (14, 114) des in dem Kunststoffkörper (30, 130) angeordneten und durch ihn umgebenen Verstärkungsrings (10, 110) geformt ist.

18. Kunststoff-Fitting (12, 112) nach einem der Ansprüche 1 bis 17, bei welchem ein Gewindeansatz (32A, 132A) und ein Gewindeende (32B, 132B) des Kunststoffkörpers (30, 130) vorhanden sind und sich der rohrförmige Abschnitt (14, 114) des Verstärkungsrings (10, 110) nach hinten wenigstens bis zum Gewindeende des Kunststoffkörpers erstreckt.

19. Kunststoff-Fitting (12, 112) nach Anspruch 18, bei welchem sich der erste rohrförmige Abschnitt (14, 114) nach hinten über das Gewindeende (32B, 132B) des Kunststoffkörpers (30, 130) hinaus erstreckt.

## Revendications

1. Raccord plastique (12, 112) prévu pour coopérer avec une partie filetée engageant le raccord plastique depuis une direction vers l'avant, le raccord plastique comprenant un corps plastique (30, 130) ayant des filetages plastiques (32, 132) et une bague de renfort (10, 110), dans lequel la bague de renfort comprend une première partie tubulaire (14, 114) et un filetage de démarrage (24, 124), dans lequel la première partie tubulaire (14) de la bague de renfort entoure au moins une partie du corps plastique, dans lequel le filetage de démarrage (24, 124) de la bague de renfort est aligné de manière concentrique et axiale avec les filetages (32, 132) du corps plastique (30, 130), **caractérisé en ce que** la bague de renfort est estampée à partir d'une feuille de métal (42) et comprend une partie radiale (16, 116) s'étendant radialement depuis une extrémité vers l'avant (18, 118) de la partie tubulaire, une partie de guidage (20, 120) s'étendant vers l'arrière depuis la partie radiale (16, 116), le filetage de démarrage s'étendant radialement depuis une extrémité vers l'arrière (26, 126) de la partie de guidage, et forme une surface de front d'un premier filetage des filetages (32, 132) du corps plastique (30, 130).

2. Raccord plastique (12) selon la revendication 1, dans lequel la partie radiale (16) s'étend radialement vers l'intérieur depuis l'extrémité vers l'avant (18) de la partie tubulaire (14), la partie de guidage (20) s'étendant vers l'arrière depuis une région radialement interne de la partie radiale (16), et le filetage de démarrage (24) s'étendant radialement vers l'intérieur depuis une extrémité vers l'arrière (26) de la partie de guidage.

3. Raccord plastique (112) selon la revendication 1, dans lequel la partie radiale (116) s'étend radialement vers l'extérieur depuis l'extrémité vers l'avant (118) de la partie tubulaire (114), la partie de guidage (120) s'étendant radialement depuis une région radialement externe de la partie radiale (116), et le filetage de démarrage (124) s'étendant radialement vers l'extérieur depuis une extrémité vers l'arrière (126) de la partie de guidage.

4. Raccord plastique selon la revendication 1, dans lequel la partie de guidage (20, 120) est tubulaire.

5. Raccord plastique (10) selon la revendication 2, dans lequel la partie de guidage (20) est conique et s'étend vers l'arrière et vers l'intérieur.

6. Raccord plastique (110) selon la revendication 3, dans lequel la partie de guidage (120) est conique et s'étend vers l'arrière et vers l'extérieur.

7. Raccord plastique (10, 110) selon l'une quelconque des revendications 1 à 6, dans lequel la première partie tubulaire (14) est cylindrique.

8. Raccord plastique (10, 110) selon l'une quelconque des revendications 1 à 6, dans lequel la première partie tubulaire (14) est conique.

9. Raccord plastique (10, 110) selon l'une quelconque des revendications 1 à 8, dans lequel la bague de renfort est faite en métal, de préférence d'acier inoxydable, ou en matériau plastique technique ou céramique.

10. Raccord plastique (10, 110) selon l'une quelconque des revendications 1 à 9, dans lequel le filetage de démarrage (24, 124) n'est pas supérieur à 360 degrés autour de la partie de guidage.

11. Raccord plastique (10, 110) selon l'une quelconque des revendications 1 à 9, dans lequel le filetage de démarrage (24, 124) est de 360 degrés autour de la partie de guidage.

12. Raccord plastique (10, 110) selon l'une quelconque des revendications 1 à 10, dans lequel la bague de renfort est estampée à partir d'une feuille d'acier inoxydable.

13. Raccord plastique (10, 110) selon l'une quelconque des revendications 1 à 12, dans lequel chacune des première partie tubulaire (14, 114), partie radiale (16, 116) et partie de guidage (20, 120) a une épaisseur, et l'épaisseur de chacune des première partie tubulaire, partie radiale et partie de guidage, est relativement petite par rapport au diamètre de la première partie tubulaire (14, 114).

14. Raccord plastique (12) pour recevoir une partie de filetage mâle (28, 112), selon la revendication 2, dans lequel la partie de guidage (20) de la bague de renfort (10) forme une partie de guidage du raccord pour guider la partie mâle vers le filetage de démarrage (24).

15. Raccord plastique (112) pour entrer dans une partie filetée femelle, selon la revendication 3, dans lequel la partie de guidage (120) de la bague de renfort (110), forme une partie de guidage du raccord pour guider le filetage de démarrage (124) du raccord vers la partie femelle.

16. Raccord plastique (12, 112) selon l'une quelconque des revendications 1 à 15 dans lequel la partie radiale (16, 116) de la bague de renfort (10, 110) forme une partie protectrice vers l'avant, protégeant le corps plastique (30, 130) du contact avec la partie engageant le raccord lorsque ladite partie s'engage initialement dans le raccord.

17. Raccord plastique (12, 112) selon l'une quelconque des revendications 1 à 16, dans lequel le raccord plastique est moulé avec la première partie tubulaire (14, 114) de la bague de renfort (10, 110) positionnée à l'intérieur de et entourée par le corps plastique (30, 130).

18. Raccord plastique (12, 112) selon l'une quelconque des revendications 1 à 17, dans lequel il y a un premier filetage (32A, 132A) et un dernier filetage (32B, 132B) du corps plastique (30, 130), et la partie tubulaire (14, 114) de la bague de renfort (10, 110) s'étend vers l'arrière jusqu'à au moins le dernier filetage du corps plastique.

19. Raccord plastique (12, 112) selon la revendication 18, dans lequel la première partie tubulaire (14, 114) s'étend vers l'arrière au-delà du dernier filetage (32B, 132B) du corps plastique (30, 130).
